# EUROPÄISCHE PATENTSCHRIFT

(11) **EP 1 791 057 B1**
(45) Veröffentlichungstag und Bekanntmachung des Hinweises auf die Patenterteilung: **12.08.2009**
(21) Anmeldenummer: 06024281.5
(22) Anmeldetag: 23.11.2006
(51) Int. Cl.: G06F 9/46, G06K 19/07

(54) **Pipeline-Mechanismus für den Datenaustausch zwischen Chipkarte und Terminal**
Pipeline-Mechanism for data exchange between a chipcard and a terminal
Mécanisme-Pipeline d'échange de données entre une carte à puce et un terminal

(30) Priorität: 29.11.2005 DE 102005056865
(43) Veröffentlichungstag der Anmeldung: 30.05.2007
(73) Patentinhaber: Giesecke & Devrient GmbH, 81677 München (DE)
(72) Erfinder: Hartel, Karl Eglof, 80689 München (DE)

(56) Entgegenhaltungen:
- EP-A2- 0 733 992
- US-A- 4 888 773
- US-B1- 6 676 022
- US-B2- 6 871 257

## Beschreibung

Die Erfindung liegt auf dem Gebiet der Chipkarten-Technologie und betrifft insbesondere ein Verfahren, eine Steuereinrichtung und ein System zur Datenübertragung zwischen einem tragbaren Datenträger, insbesondere einer Chipkarte, und einem zugeordneten Terminal.

Grundsätzlich kann der gesamte Vorgang der Datenübertragung von und zur Chipkarte im Rahmen eines ISO-OSI-Schichtenmodells (OSI steht für "open systems interconnections") der ISO (International Standardisation Organisation) in drei Schichten dargestellt werden. Die unterste Schicht, auch Layer 1 oder physikalische Schicht genannt, betrifft die physikalische Ebene, in der alle elektrischen Ereignisse auf dem Input-/Output-Kanal beschrieben werden. Diese Schicht ist in den internationalen Normen für Chipkarten ISO/IEC-Norm 7816-3 (für kontaktbehaftete Chipkarten) und Norm 10 536-3 (für kontaktlose Chipkarten) definiert. In einer darüber liegenden Schicht 2 bzw. Layer 2, auch Leitungsschicht genannt, sind alle logischen Abläufe der eigentlichen Übertragungsprotokolle definiert. Über der Leitungsschicht befindet sich die OSI-Schicht 7, die Anwendungsschicht, in der das Verhalten der jeweiligen Applikationen beschrieben wird.

Gegenstand der vorliegenden Erfindung ist die Datenübertragung auf der Anwendungsschicht bzw. Applikationsschicht des ISO-OSI-Schichtenmodells zwischen einem tragbaren Datenträger, der mit einem Mikroprozessor ausgestattet ist, und einem Terminal. Bei der Realisierung der Erfindung können vorzugsweise unterschiedliche Protokolle der darunter liegenden Schicht (Layer 2) zum Einsatz kommen.

In Bezug auf die Protokolle für die Datenübertragung auf der Schicht 2 des ISO-OSI-Modells ist bisher eine Vielzahl von Vorschlägen entwickelt worden, die im Zuge einer Vereinheitlichung Eingang in Normen und Standards gefunden haben.

Bei den Verfahren auf der Leitungsebene unterscheidet man zwischen Vollduplex- und Halbduplex-Verfahren.

Bei den Vollduplex-Verfahren können die beiden Teilnehmer - hier also die Chipkarte und das Terminal - gleichzeitig senden und empfangen. Das auf dem Vollduplex-Prinzip basierende Verfahren wird in dem Entwurf für die Norm ISO/ IEC 10536-4 der ISO beschrieben. Es ist ein asynchrones, blockartig strukturiertes Vollduplex-Übertragungsprotokoll und wird auch als T=2 Protokoll bezeichnet. Dabei steht der Begriff "T" für "Transport Protocol".

Bisher ist jedoch nicht das vorstehend beschriebene Vollduplex -Prinzip, sondern noch das Halbduplex Prinzip im Einsatz. Bei den Halbduplex-Verfahren ist nur ein Übertragungskanal vorgesehen, so dass nur jeweils einer der beiden Teilnehmer Daten über die Schnittstelle übertragen kann. Protokolle, die auf dem Halbduplex-Prinzip basieren, sind genormt in den Normen ISO/IEC 7816-3 (auch als T=0- und T=1-Protokolle bezeichnet).

Eine bisher im Stand der Technik bekannte Schnittstelle zur Datenübertragung zwischen Chipkarte und Terminal arbeitet streng sequenziell. Dabei werden stets folgende Prozesse in der nachstehenden Reihenfolge ausgeführt:
- das Terminal überträgt ein Kommando an die Karte;
- dieses Kommando wird auf der Karte bearbeitet, so dass eine Antwort auf dieses Kommando erzeugt werden kann;
- die so erzeugte Antwort wird an das Terminal zurückgesendet;
- die Antwort wird ausgewertet bzw. weiterverarbeitet und das nächste Kommando kann vorbereitet werden.

Für das nächste Kommando können die vorstehend aufgeführten Schritte wiederholt werden.

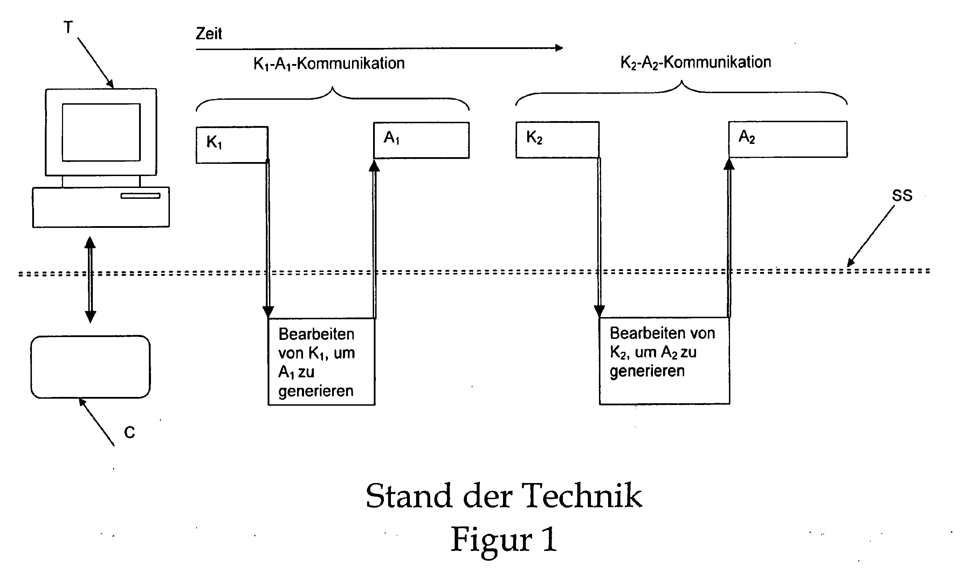

Fig.1 zeigt das streng sequenzielle Vorgehen gemäß dem Stand der Technik. Bei Aktivierung einer Bearbeitungs-Instanz (z.B. Chipkartenprozessor oder Terminalprozessor) wird die Übertragungs-Instanz (z.B. die Schnittstelle SS) auf "Wartend" gesetzt und geht in einen Leerlauf- oder Passivzustand. Das spiegelbildliche geschieht umgekehrt: Bei Aktivierung zumindest einer der Bearbeitungs-Instanzen geht die Übertragungs-Instanz zwangsläufig in einem Wartezustand und wird passiv. Wie aus Fig.1 ersichtlich ist, kann ein Bearbeitungsprozess also nur dann ausgeführt werden, wenn keine Übertragung auf der Schnittstelle erfolgt und umgekehrt. Eine Überlappung zwischen einer Bearbeitungsphase und einer Übertragungsphase existiert zu keiner Zeit. Dies hat den Nachteil, dass während der Bearbeitungsphasen (Bearbeitung auf der Karte oder Bearbeitung im Terminal) die Kapazität des Übertragungskanals nicht genutzt wird. Umgekehrt werden die Bearbeitungskapazitäten (sowohl auf der Karte als auch auf dem Terminal) nicht genutzt, wenn Daten über die Schnittstelle übertragen werden. Mithin werden weder die Übertragungs-Kapazität der Schnittstelle SS noch die Bearbeitungs-Kapazitäten der Prozessoren des Terminals T oder der Chipkarte C voll ausgenutzt.

Auf anderen Gebieten der Übertragungstechnologien, die nicht die Chipkartentechnik betreffen, ist es im Stand der Technik bereits bekannt, die Zugriffe auf ein Speichersystem zu verbessern. In diesem Zusammenhang zeigt die US 6,871,257 ein Verfahren, um die Übertragung zu einem nichtflüchtigen Speichersystem zu verbessern, indem ein "Pipeline"-Prinzip auf mehrere Speichereinheiten angewendet wird. Dabei wird ein Speicher in mehrere Speichereinheiten aufgeteilt. Während ein Speicherzugriff auf der ersten Speichereinheit ausgeführt wird, ist es möglich, die Daten über einen Controller auf einer weiteren Speichereinheit zu bearbeiten.

Aus der US 4,888,773, die ebenfalls auf dem Gebiet der Speicherkarten-Architektur und der diesbezüglichen Schnittstellen liegt, sind eine Schnittstelle für eine Speicherkarte und eine entsprechende Architektur offenbart, die als Verbesserung der IBM-Serie 9370 zu sehen sind. Hier wird auf der untersten Ebene des OSI-Schichtenmodells, also auf der physikalischen Schicht 1, ein Verfahren zur Steigerung der Effizienz der Datenübertragung vorgestellt.

Aus der US 6,676,022 B1 ist ein Verfahren bekannt, um die Leistungsfähigkeit einer Smart Card bei der gleichzeitigen Bearbeitung unterschiedlicher Anwendungen zu verbessern und die systembedingte Begrenzung durch eine streng sequentielle Funktionsweise zu überwinden. Zu diesem Zweck wird auf der Smart Card eine Kommandowarteschlange eingerichtet, in die auf der Smart Card eingehende Kommandos bis zu ihrer Bearbeitung eingereiht werden. Die Smart Card arbeitet die wartenden Kommandos ab, sobald dies möglich ist. Um die die Kommandos aussendenden Anwendungen über den jeweiligen Bearbeitungszustand zu informieren, wird ein neues Kommando eingeführt. Ein weiteres neues Kommando wird eingeführt, um es zu ermöglichen, mehrere auf der Smart Card bereitgestellte Antworten gesammelt zu übertragen. Die bekannte

Lösung ist auf Situationen zugeschnitten, in denen eine Smart Card mehrere Anwendungen gleichzeitig ausführt. Für den in der Praxis typischen Fall, daß eine Smart Card genau eine Anwendung ausführt, bringt die bekannte Lösung keine Vorteile.

Im Zusammenhang mit dem T=1-Protokoll ist weiterhin der Mechanismus der Blockverkettung ("Chaining") bekannt, der es jeweils einem der beiden Kommunikationspartner ermöglicht, Datenblöcke bzw. Datencontainer zu übertragen, die größer sind als der betreffende Sende- oder Empfangspuffer. Dieser Mechanismus ermöglicht es, dass längere Datenpakete übertragen werden, basiert jedoch immer noch auf einem rein sequenziellen Ansatz. Ein Datencontainer wird bei diesem Konzept in mehrere Einzelblöcke aufgeteilt, die seriell zwischen Terminal und Chipkarte übertragen werden.

Aus dem Stand der Technik ist es jedoch nicht bekannt, eine Lösung auf Anwendungsebene, also auf der Schicht 7, bereitzustellen, die eine effiziente Datenübertragung/-bearbeitung zwischen Chipkarte und Terminal gewährleistet und die zudem unabhängig von den darunter liegenden Schichten ist.

Die vorliegende Erfindung hat sich deshalb zur Aufgabe gestellt, einen Weg aufzuzeigen, um die Gesamt-Effizienz in Bezug auf eine Datenübertragung/ -bearbeitung zwischen einem tragbaren Datenträger und einem Terminal zu verbessern und mit dem die Ressourcen der Karte, des Terminals und der Schnittstelle besser genutzt werden können.

Die Aufgabe wird durch ein Verfahren, eine Steuereinrichtung und ein Datenverarbeitungssystem gemäß den beiliegenden unabhängigen Ansprüchen gelöst.

Die Aufgabe wird insbesondere durch ein Verfahren zur Datenübertragung zwischen einem tragbaren Datenträger, insbesondere einer Chipkarte, die einen Mikroprozessor aufweist, und einem Terminal gelöst, das auf einer Applikationsschicht eines ISO-OSI-Schichtenmodells basiert, bei dem Daten in protokollunabhängigen Datencontainern unter Ausführung folgender Verfahrensschritte übertragen werden:
- Übertragen zumindest eines Kommandos von dem Terminal an den tragbaren Datenträger,
- Bearbeiten des Kommandos auf dem tragbaren Datenträger, indem zumindest eine Antwort auf das Kommando generiert wird und
- Übertragen der generierten Antwort von dem tragbaren Datenträger an das Terminal.
Die Datenübertragung erfolgt unter Zugriff auf einen Pipeline-Mechanismus, so dass Übertragen und Bearbeiten sich zeitlich überlappen können. Dabei ist ein Mechanismus zur Richtungsumkehr der Datenübertragung vorgesehen, in dem der tragbare Datenträger dem Terminal durch Übertragung eines Statuswortes mitteilen kann, daß es zum Empfang eines weiteren Kommandos bereit ist. Andersherum kann das Terminal dem tragbaren Datenträger - durch Übertragen eines leeren Kommandos - die Berechtigung zur Übertragung einer weiteren Antwort zurückgeben.

Im Folgenden wird die Erfindung anhand der verfahrensgemäßen Lösung beschrieben. Alle hier erwähnten Merkmale, Vorteile, Weiterbildungen und alternativen Ausführungsformen sind aber ebenso auf die anderen Lösungen der Erfindung entsprechend zu übertragen. Demnach können die vorstehend genannten Lösungen durch die Steuereinrichtung und das Datenübertragungssystem auch mittels der Merkmale aus den Unteransprüchen zu dem erfindungsgemäßen Verfahren weitergebildet sein.

Das erfindungsgemäße Verfahren zur Datenübertragung betrifft die Anwendungsschicht des ISO-OSI-Schichtenmodells. Es ist prinzipiell unabhängig von der darunter liegenden Schicht und stellt an diese keine technischen Anforderungen. So ist es insbesondere unabhängig von der Wahl des Übertragungsprotokolls anwendbar. Das steigert die Flexibilität und die Einsatzmöglichkeiten der erfindungsgemäßen Lösung.

Bei dem tragbaren Datenträger handelt es sich üblicherweise um eine Chipkarte mit einem Mikroprozessor. In alternativen Ausführungsformen sind jedoch auch andere tragbare Datenträger, wie z. B. eine MMC-Speicherkarte oder dergleichen, denkbar.

Bei dem Terminal handelt es sich um ein elektrisches Gerät, das ausgelegt ist, um die Chipkarte elektrisch zu versorgen und um eine datentechnische Kommunikationsverbindung herzustellen. Der Begriff "Terminal" ist im Rahmen dieser Erfindung nicht auf eine bestimmte Art von Terminal eingeschränkt und umfasst ein IFD (Interface Device), ein CAD (Chip Accepting Device), ein CCR (Chip Card Reader), einen Smartcard-Reader und einen Smartcard-Adapter. Des Weiteren kann die vorliegende Erfindung auf tragbare und auf stationäre Terminals angewendet werden.

In Bezug auf die Datenübertragung zwischen Chipkarte und Terminal auf der Ebene 2 des ISO-OSI-Schichtenmodells sind inzwischen eine Reihe von unterschiedlichen Übertragungsprotokollen bekannt, die grundsätzlich alle für die erfindungsgemäße Lösung eingesetzt werden können, wie z.B. das T=0-Protokoll, das T=1-Protokoll oder das T=2-Protokoll. Die durch die oben beschriebenen Übertragungsprotokolle transportierten Daten werden grundsätzlich in Dateneinheiten oder Containern übertragen. Eine Dateneinheit ist entweder ein Block oder ein Byte. Die Dateneinheiten können auch als TPDU (Transmission Protocol Data Unit) bezeichnet werden. Die TPDU-Einheiten sind protokollabhängige Container, in denen die Daten von der Chipkarte zum Terminal und umgekehrt transportiert werden. In ihnen sind dann die eigentlichen Anwendungsdaten eingebettet.

Im Unterschied zu den TPDUs, die sich auf die Schicht 2 des Schichtenmodells beziehen, gibt es auf der darüber liegenden Ebene, der Anwendungsschicht 7 des OSI-Schichtenmodells, einen entsprechenden Begriff. In der Anwendungsschicht heißen die Dateneinheiten bzw. Datencontainer APDU (APDU als Abkürzung für Application Protocol Data Unit). Vorzugsweise wird unter einem "Datencontainer" also eine APDU verstanden. Es können jedoch auch anders geartete oder strukturierte Datencontainer zum Einsatz kommen, wobei ein Datencontainer grundsätzlich protokoll-unabhängig ist.

Erfindungsgemäß umfasst ein Datencontainer ein Kommando und eine Antwort. Das Kommando geht vom Terminal aus und ist an die Chipkarte gerichtet. Die Antwort wird von der Chipkarte als Antwort auf ein Kommando des Terminals generiert. Übertragen werden somit die Kommandos und die Antworten auf die Kommandos. Dabei ist zu berücksichtigen, dass der Übertragungsvorgang grundsätzlich vom Terminal ausgehend gestartet wird. Damit sendet das Terminal ein Kommando zur Karte, diese führt das Kommando aus und sendet schließlich die Antwort auf das Kommando an das Terminal zurück. Es handelt sich somit um ein Master-Slave-Prinzip, wobei das Terminal der Master und die Karte der Slave ist. Dieses Kommunikationsprinzip wird in Bezug auf die Chipkarten-Kommunikation mit dem Terminal niemals durchbrochen.

Erfindungsgemäß ist vorgesehen, dass dieser Datenübertragungsvorgang durch einen "Pipeline"-Mechanismus erweitert wird. Gemäß dem Pipeline-Mechanismus erfolgt das Übertragen und Verarbeiten der Daten nicht mehr sequentiell, sondern derart, dass sich das Übertragen und das Bearbeiten zeitlich überlappen können. Dadurch wird es möglich, dass ein Teil eines Übertragungsprozesses bzw. der gesamte Übertragungsprozess und ein Teil des Bearbeitungsprozesses bzw. der gesamte Bearbeitungsprozess gleichzeitig stattfinden. Auf diese Weise werden zugleich die Ressourcen des Übertragungskanals (der Schnittstelle) wie die Ressourcen der Bearbeitungs-Module (insbesondere der Prozessor der Chipkarte und der Prozessor des Terminals) genutzt. Durch die somit mögliche Parallelisierung der Schnittstelle zwischen Chipkarte und Terminal kann deren Effizienz gesteigert werden kann.

Der erfindungsgemäße Pipeline-Mechanismus umfasst die Definition einer Pipelinetiefe, die angibt, wie viele Datencontainer gleichzeitig übertragen werden können. Bei der heutigen auf einer rein sequenziellen Übertragung basierenden Schnittstelle beträgt die Pipelinetiefe "1", da jeweils nur genau ein Datencontainer unterwegs sein kann.

Ein Vorteil der erfindungsgemäßen Lösung ist darin zu sehen, dass das Verfahren grundsätzlich unabhängig von der Wahl des jeweiligen Übertragungsprotokolls auf der ISO-OSI-Schicht 2 ist und dass insbesondere die Protokolle T=0, T=1, T=2 oder andere eingesetzt werden können.

Desweiteren hat die erfindungsgemäße Lösung den Vorteil eines deutlich gesteigerten Gesamt-Datendurchsatzes, ohne dass der interne Takt des tragbaren Datenträgers und/ oder der Takt der Schnittstelle zwischen Datenträger und Terminal gesteigert werden müssen. Die Erfindung kann somit umgesetzt werden, ohne dass Modifikationen an darunter liegenden Schichten, insbesondere der physikalischen Leitungsschicht, notwendig sind.

Der gesamte Datenaustausch zwischen Chipkarte und Terminal erfolgt über protokoll-unabhängige Datencontainer. In der bevorzugten Ausführungsform handelt es sich bei diesem Datencontainer um eine so genannte "Application Protocol Data Unit", im Folgenden kurz als APDU bezeichnet. Vorzugsweise basiert der Aufbau einer APDU jeweils auf der internationalen Norm ISO/IEC 7816-4 und ist damit unabhängig von dem darunter liegenden Übertragungsprotokoll. Es ist jedoch in alternativen Ausführungsformen der Erfindung auch möglich, hier andere Datenpakete für die Wahl eines Datencontainers zu wählen, insbesondere nach einem anderen Standard.

Bei einer APDU kann es sich vorzugsweise um eine Kommando-APDU (kurz: Kommando) oder um eine Antwort-APDU (kurz: Antwort) auf das jeweilige Kommando handeln.

Erfindungsgemäß ist es also durch den Pipeline-Mechanismus möglich, dass der bisher sequenzielle Prozess der Datenübertragung (Kommando 1, Kommando 2, Kommando i, ...) aufgelöst und so parallelisiert wird, dass ein maximaler Parallelisierungsgrad zwischen einer Bearbeitungsphase und einer Übertragungsphase erzielt werden kann. Bei dem Bearbeiten handelt es sich entweder um ein Bearbeiten auf dem Mikroprozessor des tragbaren Datenträgers, z. B. zum Generieren einer Antwort auf ein bestimmtes Kommando, oder es handelt sich um das Bearbeiten auf einem Prozessor des Terminals, z. B. zum Generieren eines Kommandos.

Vorteilhafterweise ist es erfindungsgemäß möglich, die Art des Pipeline-Mechanismus zu konfigurieren. Insbesondere kann zwischen einem impliziten Pipelining und einem expliziten Pipelining gewählt werden.

Bei einem impliziten Pipelining stimmt die Reihenfolge der Kommandos mit der Reihenfolge der in Bezug auf diese Kommandos generierten Antworten überein und ist durch die Reihenfolge der Kommandos implizit vorgegeben. Die Reihenfolge der Kommandos und die Reihenfolge der Antworten werden bei dem impliziten Pipelining sequenziell abgearbeitet.

Wird das implizite Pipelining-Konzept bei den Halbduplex-Protokollen T=0 oder T=1 eingesetzt, so ist es notwendig, den Pipeline-Mechanismus mit einem Mechanismus zur Richtungsumkehr zu erweitern. Die Richtungsumkehr bezieht sich dabei auf eine Umkehr des Senderechtes. Dies ist notwendig, da bei den beiden vorstehend genannten Protokollen vorgesehen ist, dass bei bzw. nach jeder Übertragung auch das Senderecht übergeben wird. Dieser Mechanismus muss erfindungsgemäß unterbrochen werden, so dass es auch möglich ist, dass das Senderecht sofort nach Übertragung eines Datencontainers an den Sender des jeweiligen Datencontainers zurückgeht.

Alternativ ist es auch möglich, ein explizites Pipelining zu bestimmen, bei dem die Reihenfolge der Kommandos nicht mit der Reihenfolge der in Bezug auf diese Kommandos generierten Antworten übereinstimmen muss. Erfindungsgemäß ist es vorgesehen, dass bei einem expliziten Pipelining der Pipeline-Mechanismus um einen Pipeline-Indikator ergänzt wird. Der Pipeline-Indikator ermöglicht eine Zuordnung von Kommando und zugehöriger Antwort. Damit wird es möglich, dass Antworten in einer anderen Reihenfolge zurückgegeben werden, als die zugehörigen Kommandos eingegangen sind.

Vorzugsweise ist auch bei einem expliziten Pipelining der oben beschriebene Mechanismus zur Richtungsumkehr des Senderechtes vorgesehen, falls das Übertragungsprotokoll vom Typ T=0 oder T=1 ist.

Die vorstehend beschriebenen, erfindungsgemäßen Ausführungsformen des Verfahren können als Computerprogrammprodukt ausgebildet sein, mit einem von einem Computer lesbaren Medium und mit einem Computerprogramm und zugehörigen Programmcode-Mitteln, wobei der Computer nach Laden des Computerprogramms zur Durchführung des oben beschriebenen, erfindungsgemäßen Verfahrens veranlasst wird. Bei dem Computer kann es sich um den Computer des Terminals und/ oder um den Mikrocomputer der Chipkarte handeln.

Eine alternative Aufgabenlösung sieht ein Speichermedium vor, das zur Speicherung des vorstehend beschriebenen, computer-implementierten Verfahrens bestimmt ist und von einem Computer und/oder Mikrocomputer lesbar ist.

Eine weitere Lösung der Aufgabe ist darin zu sehen, dass das oben beschriebene Verfahren als Betriebssystemkomponente für einen tragbaren Datenträger ausgebildet ist, die gemäß zumindest einem Merkmal des Verfahrens betrieben wird.

Zusätzliche, vorteilhafte Ausführungsformen ergeben sich aus den Unteransprüchen.

Anhand der Zeichnung werden in der folgenden Figurenbeschreibung Ausführungsbeispiele der Erfindung mit deren Merkmalen und weiteren Vorteilen näher eräutert. Es zeigen:
- Fig.1: eine strukturelle Darstellung einer Datenübertragung zwischen einer Chipkarte und einem Terminal nach dem bekannten Vorgehen aus dem Stand der Technik,
- Fig. 2: eine strukturelle Darstellung der Datenübertragung gemäß einer bevorzugten Ausführungsform der Erfindung, basierend auf einem impliziten Pipelining und
- Fig. 3: eine strukturelle Darstellung der Datenübertragung gemäß einer bevorzugten Ausführungsform der Erfindung mit einem expliziten Pipelining.

Grundsätzlich wird der Datenaustausch bzw. die Kommunikation zwischen einer Chipkarte C und einem Terminal T jeweils von dem Terminal T aus angestoßen bzw. ausgelöst. Das Terminal T ist dabei die Instanz, die Kommandos Kᵢ absetzt und diese über eine Schnittstelle SS an die Chipkarte C überträgt. Auf der Chipkarte C wird ein Kommando Kᵢ dann jeweils bearbeitet, indem eine Antwort Aᵢ auf das jeweilige Kommando Kᵢ generiert wird, die an das Terminal T zurückgesendet wird.

Die Datenübertragung zwischen der Chipkarte C und dem Terminal T erfolgt über Datencontainer. Ein Datencontainer umfasst in einem Daten- bzw. Informationsfeld zumindest ein Kommando Kᵢ, zumindest eine Antwort Aᵢ und/ oder in weiteren Feldern protokollbezogene oder schnittstellenbezogene Daten. In welcher Form die weiteren protokoll-bezogenen Daten in dem Datencontainer abgelegt sind, ist abhängig von der Wahl des jeweiligen Übertragungsprotokolls. Im Falle des T=1-Protokolls umfasst der Datencontainer neben dem Kommando Kᵢ oder der Antwort Aᵢ ein Prolog- und ein Epilog-Feld. Im Falle des Protokolls T=0 umfasst der Datencontainer neben dem eigentlichen Datenfeld (bestehend aus Kommando Kᵢ oder Antwort Aᵢ) einen sogenannten Header zur Übertragung von schnittstellen-relevanten Daten.

Das jeweils zugrundeliegende Übertragungsprotokoll kann auch dynamisch jeweils vor einer Datenübertragung zwischen Chipkarte C und Terminal T. ausgewählt sein. Die Art des ausgewählten Protokolls kann in einem bestimmten Parameter, einem so genannten Protocol Type Selection (auch kurz als PTS bezeichnet oder synonym dazu ein Protocol Parameter Selection, kurz PPS) codiert werden.

Erfindungsgemäß umfasst ein Datencontainer jeweils zwingend protokollbezogene Daten, während das eigentliche Informations- bzw. Datenfeld optional ist und auch leer sein kann.

Abhängig von der Wahl des zugrundeliegenden Übertragungsprotokolls gibt es neben den Datencontainern noch weitere Container, die kein Datenfeld haben und somit nicht dem Datenaustausch dienen, sondern zum Zwecke des Austausches von protokollbezogenen Parametern eingesetzt werden.

Von dem bekannten T=1-Protokoll, das im Zusammenhang mit Fig. 1 beschrieben wurde, sind etwa ein Empfangsbestätigungs-Block bzw. - Container und ein System-Block bzw. -Container bekannt.

Um das aus ihrer streng sequentiellen Arbeitweise resultierende Effizienz-Defizit einer Schnittstelle gemäß Fig.1 zu überwinden, wird erfindungsgemäß bei der Datenübertragung ein Pipeline-Mechanismus eingesetzt. Dieser erlaubt es, daß sich die Phase des Übertragens und die Phase des Bearbeitens zeitlich überlappen und gegebenenfalls sogar vollständig parallelisiert sein können. Damit kann die Gesamtkapazität des Systems deutlich gesteigert werden, indem auch während einer Bearbeitung die Schnittstelle SS zur Datenübertragung genutzt werden kann und umgekehrt.

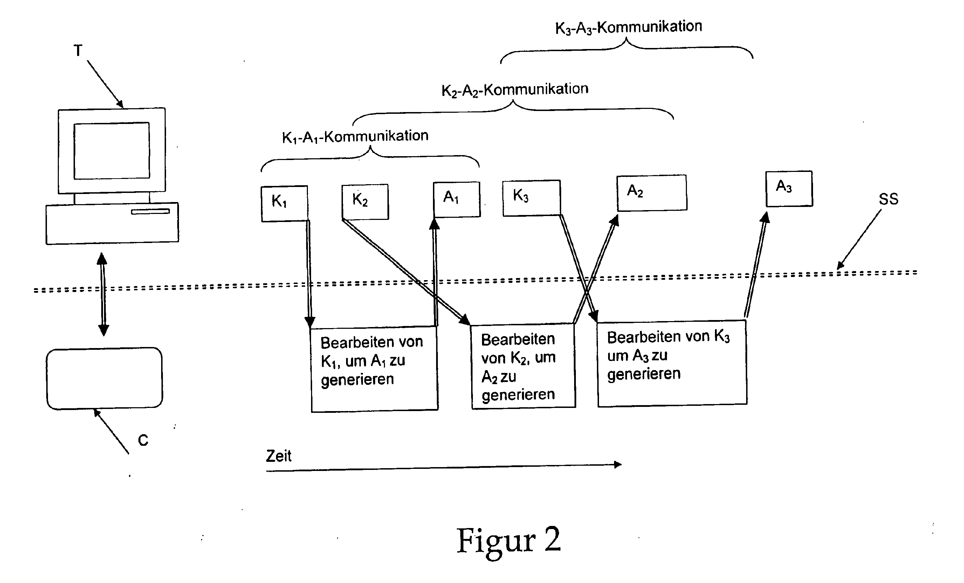

In Fig. 2 ist schematisch die Durchführung einer erfindungsgemäßen Datenübertragung unter Zugriff auf einen Pipeline-Mechanismus dargestellt. Der Darstellung liegt dabei ein implizites Pipelining-Konzept zugrunde, wobei hier eine Pipelinetiefe "2" verwendet wurde.

Die in Fig. 2 gezeigte Datenübertragung basiert auf der stets gleichen Grundsequenz: "Kommando Kᵢ - Bearbeitung des Kommandos Kᵢ auf der Chipkarte und Übertragung einer Antwort Aᵢ auf das Kommando Kᵢ". Wie aus der Fig. 2 ersichtlich, wird dabei das zweite Kommando K₂ bereits zur Karte C übertragen, während das erste Kommando K₁ noch abgearbeitet wird. Nach Abschluss der Bearbeitung von Kommando K₁ wird die dazugehörige Antwort A₁ übertragen und gleichzeitig mit der Bearbeitung von dem zweiten Kommando K₂ begonnen. Nach Ende der Übertragung von der ersten Antwort A₁ kann bereits ein drittes Kommando K₃ übertragen werden. Dieser Vorgang kann beliebig fortgesetzt werden.

Erfindungsgemäß kann also der Vorgang der Datenübertragung in folgende Prozesse untergliedert werden:
1. Das Terminal T überträgt eine Kommando-APDU Kᵢ über die Schnittstelle SS an die Chipkarte C
2. Die Chipkarte bearbeitet das empfangene Kommando-APDU Kᵢ, indem es eine Antwort-APDU Aᵢ auf das Kommando Kᵢ generiert
3. Die Chipkarte überträgt die generierte Antwort-APDU Aᵢ an das Terminal T,
wobei mittels des Pipeline-Mechanismus mehrere der vorstehenden Prozesse gleichzeitig ausgeführt werden können. Wie viele Prozesse gleichzeitig ausgeführt werden können, ist in der Pipelinetiefe codiert. Mit anderen Worten wird eine Parallelisierung der vorstehenden Prozesse erzielt, indem die Prozesse der Datenübertragung anders strukturiert werden, so dass eine Bearbeitungsphase und eine Übertragungsphase gleichzeitig stattfinden können.

Die Übertragungsphase dient zum Übertragen von Datencontainern, insbesondere von Kommandos Kᵢ und Antworten Aᵢ. Die Bearbeitungsphase dient zum Bearbeiten der Kommandos Kᵢ und zum Generieren einer Antwort Aᵢ auf der Chipkarte C.

Im Folgenden wird der Fall beschrieben, wenn das implizite Pipelining auf das Protokoll T=0 angewendet wird.

Grundsätzlich ist es hier notwendig, einen Mechanismus zur Umkehr des Senderechtes zwischen Chipkarte C und Terminal T vorzusehen, so dass eine der beiden Einheiten (Chipkarte C oder Terminal T) nach einer Übertragung eines Datencontainers nicht automatisch auch das Senderecht übergibt, sondern weiterhin zur Übertragung von weiteren Datencontainern berechtigt ist.

In einer vorteilhaften Ausführungsform ist als Mechanismus zur Richtungsumkehr ein Statuswort "Pipeline SW" vorgesehen, das dem Terminal T mitteilt: "Kommando Kᵢ in Bearbeitung - Karte C kann ein weiteres Kommando Kᵢ₊₁ empfangen". Damit wird es möglich, dass das Terminal T ein weiteres Kommando Kᵢ₊₁ an die Karte C sendet, falls ein solches ansteht, bevor die Antwort bzw. die Antworten Aᵢ, Aᵢ₋₁, ... eines oder mehrerer bereits gesendeter Kommandos K eingegangen sind.

Um einen Dead-Lock zu vermeiden, benötigt der vorstehend beschriebene Mechanismus zusätzlich ein "leeres Kommando", mit dem die Sendeberechtigung nach einem Statuswort "Pipeline SW" an die Karte C zurückgegeben wird, falls kein weiteres parallel zu bearbeitendes Kommando K vom Terminal T an die Karte C gesendet wird.

Vorteilhafterweise ist es möglich, dass sowohl die Karte C als auch das Terminal T die Pipelinetiefe des Pipeline-Mechanismus dynamisch steuern. Die Karte C sendet ein Statuswort "Pipeline SW" nur, falls vor der nächsten Antwort Aᵢ tatsächlich noch ein weiteres Kommando Kᵢ parallel empfangen und zwischengespeichert werden kann. Falls das Terminal T das durch ein "Pipeline SW" gegebene Angebot zur Erhöhung der Pipelinetiefe nicht nutzen will, so sendet es ein leeres Kommando zurück. Ebenso muss das Terminal T Antworten Aᵢ von der Karte C mit einem leeren Kommando beantworten, wenn noch Antworten Aᵢ weiterer Kommandos Kᵢ ausstehen und das Terminal T keine weiteren Kommandos Kᵢ sendet.

Es ist auch möglich, dass implizite Pipelinekonzept auf das Protokoll T=1 anzuwenden. Auch hier ist ein Mechanismus zur Richtungsumkehr des Senderechts vorgesehen. Wir vorstehend bei dem Protokoll T=0 beschrieben, kann dieser Mechanismus durch das Pipeline-Statuswort ausgebildet sein. Alternativ dazu ist es bei dem Protokoll T=1 möglich, statt des Pipeline-Statuswortes einen so genannten R-Block und statt dem leeren Kommando einen leeren Informations-Block als Mechanismus zur Richtungsumkehr zu verwenden.

Darüberhinaus kann das implizite Pipelinekonzept auch bei einem T=2-Protokoll angewendet werden.

Bei diesem Protokoll, für den bereits ein ISO-Entwurf mit dem Kennzeichen ISO 10536-4 vorliegt, ist - im Gegensatz zu den beiden vorstehend beschriebenen Protokollen - ein Vollduplex-Verfahren vorgesehen, so dass eine gleichzeitige bzw. parallele Übertragung und Quittierung von Datencontainern in beiden Richtungen erlaubt ist. Hier können ohne Einschränkungen mehrere Kommandos Kᵢ nacheinander zur Karte C übertragen werden. Über einen so genannten RNR-Block (Receive not ready-Block) kann die Karte C dem Terminal T gezielt mitteilen, dass sie aktuell kein weiteres Kommando Kᵢ empfangen kann. Darüber hinaus kann sie über einen so genannten R-Block (Receive ready-Block) den Empfang für weitere Kommandos Kᵢ wieder freigeben.

Bei diesem Protokoll können Antworten gesendet werden, sobald sie auf der Karte C verfügbar sind, das heißt also auch, während parallel eines der nächsten Kommandos Kᵢ empfangen wird. Über die Sequenz der APDUs ist immer eine eindeutige Zuordnung der jeweiligen Antworten Aᵢ auf die Kommandos Kᵢ möglich. Diese Zuordnung ist selbst dann möglich, wenn mehrere Antworten Aᵢ oder mehrere Kommandos Kᵢ über verkettete so genannte I-Blöcke (Information Block) gekapselt sind. In diesem Fall ist also kein Zuordnungs-Mechanismus zwischen Kommandos Kᵢ und Antworten Aᵢ notwendig.

Grundsätzlich kann neben dem impliziten Pipelining-Konzept auch ein explizites Pipelining verwendet werden. Bei dem expliziten Pipelining können Antworten Aᵢ in einer anderen Reihenfolge zurückgegeben werden, als die zugehörigen Kommandos Kᵢ empfangen worden sind. Deshalb ist ein Mechanismus notwendig, der die Zuordnung zwischen Antwort Aᵢ und Kommando Kᵢ herstellt. Dieser Zuordnungs-Mechanismus wird auch Pipeline-Indikator genannt.

Dies ist insbesondere dann sinnvoll, wenn auf der Chipkarte C nicht nur eine Übertragung und Bearbeitung stattfindet, sondern wenn auch mehrere Bearbeitungsvorgänge parallel abgewickelt werden können. Ein Beispiel hierfür ist ein Lesekommando K₁, das abgearbeitet wird, während bereits ein umfangreicheres bzw. größeres Schreibkommando K₂ durchgeführt wird. Schreiben in einen EEPROM-Baustein ist typischerweise ein langsamer Vorgang, so dass sich der Prozessor währenddessen im Wartezustand befindet und damit auch Zeit für "intelligentere" Tätigkeiten hätte.

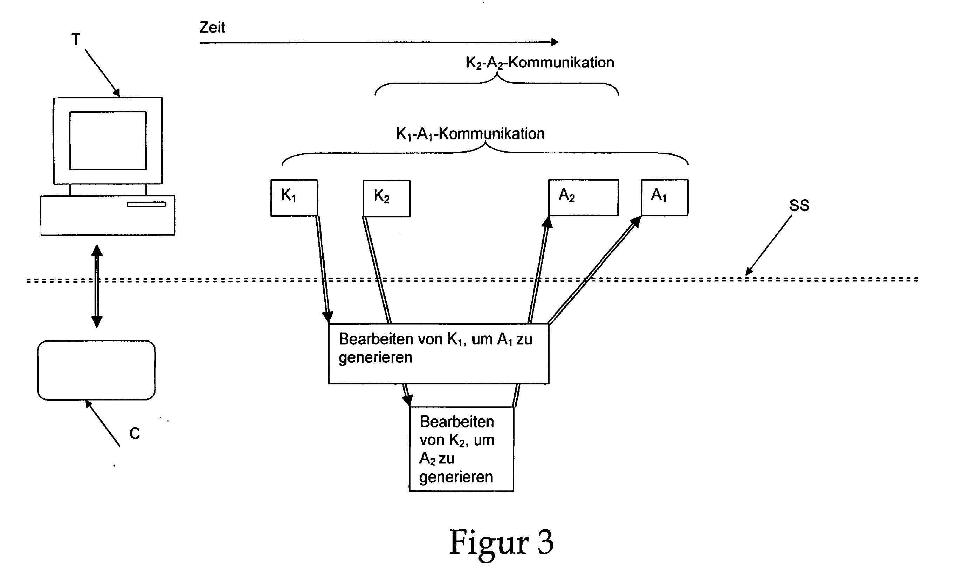

In Fig. 3 ist ein Beispiel eines expliziten Pipelinings dargestellt. Der hier rein strukturelle gezeigte Pipeline-Mechanismus umfasst zwei Bearbeitungsstufen. Die Pipelinetiefe beträgt "2".

Der Pipeline-Indikator ist vorzugsweise eine Zahl, die vom Terminal T dem jeweiligen Kommando Kᵢ zugeordnet wird. Der Wertebereich des Pipeline-Indikators muss mindestens so groß sein wie die Pipelinetiefe. Er kann beispielsweise durch einen zyklischen Zähler realisiert werden.

Der Pipeline-Indikator kann bei einem modifizierten T=0-Protokoll beispielsweise dem APDU-Header und dem Statuswort vorangestellt werden. Dann ergeben sich folgende Strukturen für:
Kommando Kᵢ: PI - CLA - INS - P1 - P2 - P3 - optional Daten
Antwort Aᵢ: optional Daten - PI - STATUSWORT1- STATUSWORT2.

Dieser Mechanismus kann auch bei den Protokollen T=1 oder T=2 verwendet werden.

Bei dem Protokoll T=1 ist es alternativ möglich, bisher ungenutzte Bits eines so genannten PCB-Bytes (Protocol Controll Byte, PCB) eines I-Blocks (Information Block) als Pipeline-Indikator zu verwenden.

Grundsätzlich handelt es sich bei der Verwendung eines Pipeline-Mechanismus um eine Modifikation der existierenden Protokolle (T=0, T=1). Erfindungsgemäß ist es deshalb vorgesehen, dass diese Modifikation eingestellt werden kann. Vorzugsweise ist deshalb eine neue Einstellmöglichkeit in einen bestimmten Datenstring, nämlich in dem ANSWER-TO-RESET (kurz als ATR bezeichnet) vorgesehen. Dieses Signal wird von der Chipkarte C am Input/Output-PIN ausgesendet, nachdem die Spannungsversorgung, der Takt und das RESET-Signal angelegt worden sind. Der ATR-String enthält unterschiedliche protokollbezogene Informationen, insbesondere Daten über die Datenübertragung und über die Chipkarte C. Grundsätzlich wird der ATR einer Chipkarte C so verwendet, dass er unabhängig von dem jeweiligen Übertragungsprotokoll empfangen werden kann. Weitere und gegebenenfalls detailliertere Einstellungen in Bezug auf den Pipeline-Mechanismus können dann beispielsweise über den Parameter "Protocol Type Selection" (kurz PTS) vereinbart werden.

Ein Vorteil der Anwendung der erfindungsgemäßen Lösung bei einem Protokoll der Art T=2 ist, dass bezüglich der vorstehend genannten Modifikationen und deren Kennzeichnung lediglich eine Vereinbarung auf Applikationsebene genügt.

Die vorliegende Erfindung kann auch durch ein Modul realisiert werden, das bei bereits bestehenden Übertragungsprotokollen eingesetzt werden kann. Falls eine Modifikation des bestehenden Übertragungsprotokolls notwendig sein sollte, ist dies auch möglich, indem die protokoll-bezogenen Daten oder protokollbezogenen Parameter geändert werden. Vorteilhafterweise sind diese protokollbezogenen Parameter ohnehin auch bei den bisher bestehenden Protokollen vorgesehen, so dass keine weiteren Änderungen notwendig sind. Die erfindungsgemäße Lösung ist eine Erweiterung oder eine Ergänzung der bisherigen Schnittstelle durch den Pipeline-Mechanismus kann als separater Baustein oder als separates Modul realisiert werden, das in das bisherige System zur Datenübertragung integriert ist. Darüber hinaus sei an dieser Stelle angemerkt, dass die erfindungsgemäße Lösung teilweise oder vollständig als Hardware- und/ oder Software-Modul realisiert werden kann.

## Patentansprüche

1. Verfahren zur Datenübertragung zwischen einem tragbaren Datenträger (C), der einen Mikroprozessor aufweist, und einem Terminal (T), wobei das Verfahren auf einer Applikationsschicht eines ISO-OSI-Schichtenmodells basiert, bei dem Daten in protokollunabhängigen Datencontainern unter Ausführung folgender Verfahrensschritte übertragen werden:
- Übertragen mehrerer Kommandos (Kᵢ) von dem Terminal (T) an den tragbaren Datenträger (C),
- Bearbeiten der Kommandos (Kᵢ) auf dem tragbaren Datenträger (C), indem zumindest eine Antwort (Aᵢ) auf jedes Kommando (Kᵢ) generiert wird und
- Übertragen der generierten Antworten (Aᵢ) von dem tragbaren Datenträger (C) an das Terminal (T),
wobei die Datenübertragung unter Zugriff auf einen Pipeline-Mechanismus erfolgt, so dass das Übertragen und das Bearbeiten sich zeitlich überlappen können,
**dadurch gekennzeichnet daß,**
ein Mechanismus zur Richtungsumkehr vorgesehen ist, in dem der tragbare
Datenträger (G) dem Terminal (T) durch Übertragung eines Statuswortes mitteilt, daß es zum Empfang eines weiteren Kommandos bereit ist, und in dem das Terminal
(T) dem tragbaren Datenträger (G) durch Übertragen eines leeren Kommandos (Kᵢ) die Berechtigung zur Übertragung einer weiteren Antwort (Aᵢ) zurückgibt.

2. Verfahren nach Patentanspruch 1, **dadurch gekennzeichnet, dass** der Datencontainer eine APDU ist.

3. Verfahren nach zumindest einem der vorstehenden Patentansprüche, **dadurch gekennzeichnet, dass** das Bearbeiten auf dem Mikroprozessor des tragbaren Datenträgers (C) insbesondere zur Vorbereitung eines Kommandos (Kᵢ) und/oder zur Verarbeitung einer Antwort (Aᵢ) erfolgt.

4. Verfahren nach zumindest einem der vorstehenden Patentansprüche, **dadurch gekennzeichnet, dass** zusätzlich zu dem Kommando (Kᵢ) und/order zu der Antwort (Aᵢ) auf ein Kommando (Kᵢ) auch protokollbezogene Daten übertragen werden.

5. Verfahren nach zumindest einem der vorstehenden Patentansprüche, **dadurch gekennzeichnet, dass** pipeline-bezogene Parameter, insbesondere eine Pipeline-Tiefe von dem tragbaren Datenträger (C) oder von dem Terminal (T) dynamisch einstellbar ist.

6. Verfahren nach zumindest einem der vorstehenden Patentansprüche, **dadurch gekennzeichnet, dass** das Verfahren auf einem asynchronen Vollduplex- oder Halbduplex-Übertragungsprotokoll zwischen dem tragbaren Datenträger und dem Terminal basiert, insbesondere auf einem Protokoll gemäß einer der ISO/ IEC-Normen 7816-3, 7816-3 amended oder 10536-4.

7. Verfahren nach zumindest einem der vorstehenden Patentansprüche, **dadurch gekennzeichnet, dass** der Pipeline-Mechanismus auf einem impliziten Pipelining basiert.

8. Verfahren nach zumindest einem der Patentansprüche 1 bis 5, **dadurch gekennzeichnet, dass** der Pipeline-Mechanismus auf einem expliziten Pipelining basiert, bei dem eine Reihenfolge der Kommandos (Kᵢ) sich von einer Reihenfolge der in Bezug auf diese Kommandos generierten Antworten (Aᵢ) unterscheiden kann, indem der Datencontainer jeweils um einen Pipeline-Indikator erweitert wird.

9. Datenübertragungssystem mit:
- einem tragbaren Datenträger (C), der mit einem Mikroprozessor ausgestattet ist,
- einem Terminal (T),
- einer Schnittstelle (SS) zur Datenübertragung zwischen dem tragbaren Datenträger (C) und dem Terminal (T), wobei das Datenübertragungssystem auf einer Applikationsschicht eines ISO-OSI-Schichtenmodells basiert, bei dem Daten in Form von Kommando (Kᵢ) und Antwort (Aᵢ) in protokoll-unabhängigen Datencontainern über die Schnittstelle (SS) zum Bearbeiten auf dem tragbaren Datenträger (C) und/ oder dem Terminal (T) übertragen werden, **gekennzeichnet durch**
- zumindest ein Pipeline-Modul, das das Datenübertragungssystem unter Zugriff auf einen Pipeline-Mechanismus so steuert, dass das Übertragen und das Bearbeiten sich zeitlich überlappen können, wobei der Pipeline-Mechanismus einen Mechanismus zur Umkehr des Senderechtes zwischen dem tragbaren Datenträger (C) und dem Terminal (T) umfaßt, in dem der tragbare Datenträger (G) dem Terminal (T) **durch** Übertragung eines Statuswortes mitteilt, daß es zum Empfang eines weiteren Kommandos bereit ist, und in dem das Terminal (T) dem tragbaren Datenträger (G) **durch** Übertragen eines leeren Kommandos (Kᵢ) die Berechtigung zur Übertragung einer weiteren Antwort (Aᵢ) zurückgibt.

10. Steuereinrichtung zur Steuerung einer Schnittstelle (SS) zwischen einem tragbaren Datenträger (C), der einen Mikroprozessor aufweist, und einem Terminal (T), wobei die Schnittstelle (SS) auf einer Applikationsschicht eines ISO-OSI-Schichtenmodells liegt, und wobei Daten in Form von Kommando (Kᵢ) und Antwort (Aᵢ) in protokoll-unabhängigen Datencontainern über die Schnittstelle (SS) zum Bearbeiten auf dem tragbaren Datenträger (C) und/ oder dem Terminal (T) übertragen werden, wobei die Steuereinrichtung zumindest ein Pipeline-Modul umfasst, das die Steuereinrichtung unter Zugriff auf einen Pipeline-Mechanismus so steuert, dass das Übertragen und das Bearbeiten sich zeitlich
überlappen können, wobei der Pipeline-Mechanismus einen Mechanismus zur Umkehr des Senderechtes zwischen dem tragbaren Datenträger (C) und dem Terminal (T) umfaßt, in dem der tragbare Datenträger (G) dem Terminal (T) durch Übertragung eines Statuswortes mitteilt, daß es zum Empfang eines weiteren Kommandos bereit ist, und in dem das Terminal (T) dem tragbaren Datenträger (G) durch Übertragen eines leeren Kommandos (Kᵢ) die Berechtigung zur Übertragung einer weiteren Antwort (Aᵢ) zurückgibt.

## Claims

1. A method for data transmission between a portable data carrier (C) having a microprocessor, and a terminal (T), the method being based on an application layer of an ISO/OSI layered model, wherein data are transmitted in protocol-independent data containers while executing the following method steps:
- transmitting a plurality of commands (Kᵢ) from the terminal (T) to the portable data carrier (C),
- processing the commands (Kᵢ) on the portable data carrier (C) by generating at least one response (Aᵢ) to each command (Kᵢ), and
- transmitting the generated responses (Aᵢ) from the portable data carrier (C) to the terminal (T),
the data transmission being effected while accessing a pipeline mechanism, so that transmitting and processing can overlap in time,
**characterized in that**
a mechanism for direction reversal is provided in which the portable data carrier (G) informs the terminal (T) by transmitting a status word that it is ready to receive a further command, and in which the terminal (T) returns to the portable data carrier (G) by transmitting an empty command (Kᵢ) the authorization to transmit a further response (Aᵢ).

2. The method according to claim 1, **characterized in that** the data container is an APDU.

3. The method according to at least one of the preceding claims, **characterized in that** processing on the microprocessor of the portable data carrier (C) is effected in particular for preparing a command (Kᵢ) and/or for processing a response (Aᵢ).

4. The method according to at least one of the preceding claims, **characterized in that** protocol-related data are also transmitted in addition to the command (Kᵢ) and/or the response (Aᵢ) to a command (Kᵢ).

5. The method according to at least one of the preceding claims, **characterized in that** pipeline-related parameters, in particular a pipeline depth, is adjustable dynamically by the portable data carrier (C) or by the terminal (T).

6. The method according to at least one of the preceding claims, **characterized in that** the method is based on an asynchronous full-duplex or half-duplex transmission protocol between the portable data carrier and the terminal, in particular on a protocol according to one of the ISO/IEC standards 7816-3, 7816-3 amended or 10536-4.

7. The method according to at least one of the preceding claims, **characterized in that** the pipeline mechanism is based on an implicit pipelining.

8. The method according to at least one of claims 1 to 5, **characterized in that** the pipeline mechanism is based on an explicit pipelining, wherein an order of commands (Kᵢ) can differ from an order of the responses (Aᵢ) generated with respect to said commands, by the data container being extended in each case by a pipeline indicator.

9. A data transmission system having:
- a portable data carrier (C) equipped with a microprocessor,
- a terminal (T),
- an interface (SS) for data transmission between the portable data carrier (C) and the terminal (T), the data transmission system being based on an application layer of an ISO/OSI layered model, wherein data are transmitted in the form of command (Kᵢ) and response (Aᵢ) in protocol-independent data containers through the interface (SS) for processing on the portable data carrier (C) and/or the terminal (T), **characterized by**
- at least one pipeline module which controls the data transmission system while accessing a pipeline mechanism in such a way that transmitting and processing can overlap in time, the pipeline mechanism comprising a mechanism for reversing the send authorization between the portable data carrier (C) and the terminal (T), in which the portable data carrier (G) informs the terminal (T) by transmitting a status word that it is ready to receive a further command, and in which the terminal (T) returns to the portable data carrier (G) by transmitting an empty command (Kᵢ) the authorization to transmit a further response (Aᵢ).

10. A control device for controlling an interface (SS) between a portable data carrier (C) having a microprocessor, and a terminal (T), the interface (SS) being located on an application layer of an ISO/OSI layered model, and data being transmitted in the form of command (Kᵢ) and response (Aᵢ) in protocol-independent data containers through the interface (SS) for processing on the portable data carrier (C) and/or the terminal (T), the control device comprising at least one pipeline module which controls the control device while accessing a pipeline mechanism in such a way that transmitting and processing can overlap in time, the pipeline mechanism comprising a mechanism for reversing the send authorization between the portable data carrier (C) and the terminal (T), in which the portable data carrier (G) informs the terminal (T) by transmitting a status word that it is ready to receive a further command, and in which the terminal (T) returns to the portable data carrier (G) by transmitting an empty command (Kᵢ) the authorization to transmit a further response (Aᵢ).

## Revendications

1. Procédé de transmission de données entre un support de données portable (C) comportant un microprocesseur, et un terminal (T), le procédé étant basé sur une couche d'application d'un modèle de couches ISO/OSI dans lequel des données sont transmises dans des containers de données indépendants des protocoles par exécution des étapes suivantes du procédé :
■ transmission de plusieurs commandes (Kᵢ) du terminal (T) au support de données portable (C),
■ traitement des commandes (Kᵢ) sur le support de données portable (C), consistant en ce qu'au moins une réponse (Aᵢ) à chaque commande (Kᵢ) est générée et
■ transmission des réponses (Aᵢ) générées du support de données portable (C) au terminal (T),
la transmission de données ayant lieu en utilisant un mécanisme pipeline, de telle sorte que la transmission et le traitement peuvent se chevaucher dans le temps,
**caractérisé en ce**
**qu'**un mécanisme d'inversion de direction est prévu, dans lequel le support de données portable (G) communique au terminal (T) par transmission d'un mot d'état qu'il est prêt à recevoir une commande supplémentaire, et en ce que le terminal (T), par la transmission d'une commande vide (Kᵢ), renvoie au support de données portable (G) l'autorisation de transmission d'une réponse (Aᵢ) supplémentaire.

2. Procédé selon la revendication 1, **caractérisé en ce que** le container de données est une APDU.

3. Procédé selon au moins une des revendications précédentes, **caractérisé en ce que** le traitement ayant lieu sur le microprocesseur du support de données portable (C) est effectué notamment pour la préparation d'une commande (Kᵢ) et / ou pour le traitement d'une réponse (Aᵢ).

4. Procédé selon au moins une des revendications précédentes, **caractérisé en ce que** des données relatives au protocole sont aussi transmises en plus de la commande (Kᵢ) et / ou de la réponse (Aᵢ) à une commande (Kᵢ).

5. Procédé selon au moins une des revendications précédentes, **caractérisé en ce que** des paramètres relatifs au pipeline, notamment une profondeur pipeline du support de données portable (C) ou du terminal (T), est dynamiquement réglable.

6. Procédé selon au moins une des revendications précédentes, **caractérisé en ce que** le procédé est basé sur un protocole de transmission asynchrone full-duplex ou semi-duplex entre le support de données portable et le terminal, notamment sur un protocole conforme à une des normes ISO/IEC 7816-3, 7816-3 modifiée ou 10536-4.

7. Procédé selon au moins une des revendications précédentes, **caractérisé en ce que** le mécanisme pipeline est basé sur un pipelining implicite.

8. Procédé selon au moins une des revendications de 1 à 5, **caractérisé en ce que** le mécanisme pipeline est basé sur un pipelining explicite dans lequel un ordre des commandes (Kᵢ) peut se différencier d'un ordre des réponses (Aᵢ) générées en relation avec ces commandes, par le fait que le container de données est respectivement élargi d'un indicateur de pipeline.

9. Système de transmission des données comportant :
■ un support de données portable (C) équipé d'un microprocesseur,
■ un terminal (T),
■ une interface (SS) pour la transmission de données entre le support de données portable (C) et le terminal (T), le système de transmission des données étant basé sur une couche d'application d'un modèle de couches ISO/OSI dans lequel des données sont transmises sous forme de commande (Kᵢ) et réponse (Aᵢ) dans des containers de données indépendants des protocoles par l'intermédiaire de l'interface (SS) pour le traitement sur le support de données portable (C) et / ou sur le terminal (T), **caractérisé par**
■ au moins un module de pipeline commandant de telle manière le système de transmission des données en utilisant un mécanisme pipeline que la transmission et le traitement peuvent se chevaucher dans le temps, le mécanisme pipeline comprenant un mécanisme d'inversion du droit d'émission entre le support de données portable (C) et le terminal (T), consistant en ce que le support de données portable (G) communique au terminal (T) par transmission d'un mot d'état qu'il est prêt à recevoir une commande supplémentaire, et en ce que le terminal (T), par transmission d'une commande vide (Kᵢ), renvoie au support de données portable (G) l'autorisation de transmission d'une réponse (Aᵢ) supplémentaire.

10. Dispositif de commande destiné à la commande d'une interface (SS) entre un support de données portable (C) comportant un microprocesseur, et un terminal (T), l'interface (SS) étant logée sur une couche d'application d'un modèle de couches ISO/OSI, et des données étant transmises sous forme de commande (Kᵢ) et réponse (Aᵢ) dans des containers de données indépendants des protocoles par l'intermédiaire de l'interface (SS) pour le traitement sur le support de données portable (C) et / ou sur le terminal, le dispositif de commande comprenant au moins un module de pipeline commandant de telle manière le dispositif de commande en utilisant un mécanisme pipeline que la transmission et le traitement peuvent se chevaucher dans le temps, le mécanisme pipeline comprenant un mécanisme d'inversion du droit d'émission entre le support de données portable (C) et le terminal (T), consistant en ce que le support de données portable (G) communique au terminal (T) par transmission d'un mot d'état qu'il est prêt à recevoir une commande supplémentaire, et en ce que le terminal (T), par transmission d'une commande vide (Kᵢ), renvoie au support de données portable (G) l'autorisation de transmission d'une réponse (Aᵢ) supplémentaire.
